# EUROPEAN PATENT APPLICATION

(11) **EP 2 036 742 A1**
(43) Date of publication of application: **18.03.2009**
(21) Application number: 07254014.9
(22) Date of filing: 10.10.2007
(51) Int. Cl.: B60B 3/04, B60B 21/02, B60C 29/02

(54) **Steel wheel without a tube**

(30) Priority: 17.09.2007 BR PI0702777
(71) Applicant: Maxion Sistemas Automotivos Ltda, 12730-900 Cruzeiro, SP (BR)
(72) Inventor: de Souza Manso, Francisco Antonio, 12600-040 Lorena SP (BR)
(74) Representative: Burt, Matthew Thomas

(57) **Abstract**

This is a description of a tubeless wheel for vehicles transporting loads or large numbers of passengers, such as trucks or busses, with an external valve (8), as well as the following products rim (1), disk (2) and valve (8) with the disk (2) mounted on the ledge of the rim (4). The parts have such a geometry that through a combination of distributed factors between the rim (1), disk (2) and valve (8), it is possible to place the valve (8) on the outside of the disk (2) being that the valve seating region is defined by two competing planes free from ridges.

## Description

The present invention refers to a wheel without a tube for load transporting vehicles or large numbers of passengers, such as trucks and busses.

### Description of the Prior Art

All motorized equipment destined for heavy work, for loads or large numbers of passengers transportation is classified as trucks and busses.

These vehicles use steel wheels without tubes, made up of two parts, rim and disk, welded at its junction.

There is a distinction in these wheel models without tubes as to the positioning of the tire core, henceforth simply called the valve. In this sense the valves may either be fitted internally or externally, depending on the construction of the elements making up the wheel and the type of brakes used by the vehicle, if it is a drum brake or a disk brake.

### Wheels with Internal Valves

Steel wheels used on trucks and busses are called tubeless wheels with internal valve, in which the valves are positioned on the side wall of the rim's drop center and reach to the external region of the wheel by means of one of the ventilation holes in the disk. This construction manner is possible due to the mounting of the disk in the region called the rim ledge.

Usually these wheel models are used on heavy vehicles with drum brakes, but may also be used on vehicles with disk breaking systems. In the latter mentioned case there are inconveniences resulting from the valve positioning on the inside of the rim, which favors the occurrence of accidents, such as the valve being broken by stones, pieces of wood or other refuse that have access to the inside of the wheel through the open regions of the disk brake units or it is even possible that it interferes with the disk brake itself.

### Wheels with External Valves

There are two prior art known configuration versions for external valves used on steel wheels on trucks and busses.

### 1) External valve seated on the side wall of the drop center:

In this configuration the valve is positioned on the lowered wall of the rim and is found on the external region of the wheel due to the fact that the disk is mounted on the drop center.

This type of construction is used on wheels with lower load capacities due to the fact that the disk is in the drop center region. This disk location has two disadvantages, and they are:
i) the diameter of the drop center is reduced and consequently the area available for the breaking system is also reduced, thus limiting its size and efficiency.
ii) the welded junction to the rim generates a thermally affected zone resulting from the elevated temperature due to welding process. This thermally affected zone in the rim's drop center, which due to it construction already presents an elevated level of tensions, considerably reduces the wheel fatigue life.

Of preference these models are to be found on light and medium vehicles with drum brakes, it may also be applied to vehicles with disk brakes.

The ES2244471 patent document shows a wheel in accordance with the above given configuration.

### 2) External valve seated on the side wall of the hump:

This form of construction was created with the purpose of placing the valve on the outside of the disk on wheels without a tube and a high load capacity and with the rim being equal to or less than nine inches in width.

Due to the reduced space on the rim's ledge, which is used to mount the disk, an alternative was found with creating a hump, that is, a ridge created on the rim's cross section during the lamination process.

This ridge allows for the seating of the valve on its side wall, creating vertical space on the limited ledge of a tubeless rim whose dimensions are the same as or less than nine inches at the same time not affecting the final width of the rim. This construction is shown in the previous technical document EP0701911.

Nevertheless this type of configuration presents a series of disadvantages, such as:
i) need for the disk to have greater height to reach the mounting point on the rim's ledge, thus increasing the momentum applied to the rim due to the displacement of this disk support, resulting in an increased level of tension in this region.
ii) need for a larger blank to guarantee the forming of the hump, resulting in an increase in the part's final weight.
iii) the hump with a ridge works as a tension concentrator in the rim's region reducing the life span due to wheel fatigue.
iv) the rim is subject to a greater variation in thickness arising from the lamination process, which may add to a discontinuity in the material's structure, making the rim fragile and compromising the wheel's safety, this may even result in its premature breakage.
v) need for increased control during the manufacturing process.
vi) placing the hump on the base of the bead-seat, which is the region where the tire is seated and may also be called the rim's shoulder. When the tire is mounted on the wheel it is mandatory the use of special equipment to feed the tire over the final diameter of the hump, otherwise it may be damaged. This fact also penalizes tire changing operations that are not carried out at authorized retailers or very well equipped workshops, once it requires an effort by the operator to feed the tire over the rim's hump during assembly.
vi) difficulties in filling the tire due to the fact that the rim's ledge diameter is smaller to contribute with more space for the formation of the hump. This condition impedes the initial sealing to fill the tire, with it being necessary to use special artifacts, such as an extra sealing rubber, which is pushed out of the rim immediately after the start of filling.

Therefore the need is highlighted to satisfy the market with tubeless wheels for trucks and busses, with widths equal to or less than nine inches and with external valves that are capable of superseding the disadvantages of the current technicalities.

### Objectives and a Brief Description of the Invention

It is therefore, the first objective of this invention to provide a tubeless steel wheel for load or large numbers of passengers transporting vehicles, such as trucks or busses, comprised by a rim, a disk and a valve with the rim's dimensions being the same as or less than nine inches in width, the rim comprising, starting from the side on which the disk is mounted, an adjacent rim flange to the bead-seat, the bead-seat adjacent to the rim's ledge, which is joined to the drop center by means of a side wall, the rim also comprises the valve seat region that is positioned between the bead-seat mid point and the start of the drop center, the disk containing an outer section associated to the rim's ledge, being that the valve's seating region is defined by two competing planes free from ridges and the valve, after it has been seated, the external section of the wheel is positioned in such a manner that it does not touch the external face of the disk or intrudes into the internal part of the wheel through the ventilation hole.

And it is therefore, the second objective of this invention to provide a tubeless wheel, with an external valve, with its width equal to or less than 9 inches to be used on trucks and busses with disk brakes, in which the rim disk combination and the valve angle allows for the placing of a valve outside of the disk without the need for creating a hump on the rim or the mounting of the disk on the drop center.

The innovative construction manner aims to supersede the defects of the technology in such a manner that the new wheel configuration presents characteristics that result in innumerable advantages, such as:
✔ Eliminating the need for creating a hump on the rim for rims of widths of 9 inches or less,
✔ Diminishing the applied momentum to the rim due to the lowered height of the disk,
✔ Diminishing the concentration of tensions due to a more homogenous load distribution on the rim,
✔ Diminishing the final suspended mass on the truck or bus due to less weight of the components rim and disk of the new wheel,
✔ Eliminating the variation of thickness on the rim, present in the hump, as a result of the lamination process,
✔ Reduction of material on the rim resulting from not using the hump,
✔ Reduction of material on the disk due to its lower height,
✔ Elimination of the need for mounting and welding the disk in the rim's drop center,
✔ Increased wheel life due to fatigue,
✔ Mounting the tire without the need for specific tools or specialized workshops,
✔ Mounting the tire without damage,
✔ Eliminating the possibility of accidents with the valve due to it being mounted outside the wheel,

The said advantages will be evident and will be described in detail further in this report.

### Brief Description of the Drawings

This invention will be described further in detail based on an execution example presented on the drawings, as well as on drawings representing the previous techniques, which aim to facilitate the understanding of the present invention and of its respective improvements and advantages. The figures show:
Figure 1 - shows a partial cross section of a tubeless wheel with the current technology and with an internal valve.
Figure 2 - shows a partial cross section of a tubeless wheel with the current technology and with an external valve and disk mounted on the drop center.
Figure 3 - shows a partial cross section of a tubeless wheel with the current technology and with an external valve and rim with a hump.
Figure 4 - shows a partial cross section of a tubeless wheel rim with the current technology and with an external valve and rim with a hump.
Figure 5 - shows a profile view of a valve usually used on a rim with a hump on a wheel with current technology.
Figure 6 - shows a partial cross section of a tubeless wheel disk with an external valve, object of the current invention.
Figure 7 - shows a partial cross section of a tubeless wheel rim with an external valve, object of the current invention.
Figure 8 - shows a partial cross section of a tubeless wheel with an external valve, object of the current invention.
Figure 9 - shows a profile view of the new valve used in assembling a wheel, object of the current invention.
Figure 10 - shows the upper portion of two wheels, and also shown is a current technology wheel with the hump compared to a wheel, which is the object of the current invention shown in the lower part of the figure.
Figure 11 - shows a partial cross section of a tubeless wheel with an external valve, object of the current invention with the following dimensions 22.5 x 9.00 inches for the disk and rim respectively.
Figure 12 - shows a partial cross section of a tubeless wheel with an external valve, object of the current invention with the following dimensions 22.5 x 8.25 inches for the disk and rim respectively.
Figure 13 - shows a partial cross section of a tubeless wheel with an external valve, object of the current invention with the following dimensions 22.5 x 7.50 inches for the disk and rim respectively.
Figure 14 - shows a partial cross section of a tubeless wheel with an external valve, object of the current invention with the following dimensions 22.5 x 6.75 inches for the disk and rim respectively.
Figure 15 - shows a partial cross section of a tubeless wheel with an external valve, object of the current invention with the following dimensions 19.5 x 7.50 inches for the disk and rim respectively.
Figure 16 - shows a partial cross section of a tubeless wheel with an external valve, object of the current invention with the following dimensions 19.5 x 6.75 inches for the disk and rim respectively.
Figure 17 - shows a partial cross section of a tubeless wheel with an external valve, object of the current invention with the following dimensions 19.5 x 6.00 inches for the disk and rim respectively.
Figure 18 - shows a partial cross section of a tubeless wheel with an external valve, object of the current invention with the following dimensions 17.5 x 6.00 inches for the disk and rim respectively.

### Detailed Description of the Drawings

In a preferred but not mandatory configuration, the developed wheel is now explained and refers to the set that makes up the wheel, made up of the rim, disk and valve.

In a sense of better defining the position of the parts making up the wheel, All sections facing the main surface of the disk are defined as "external" or "of the disk".

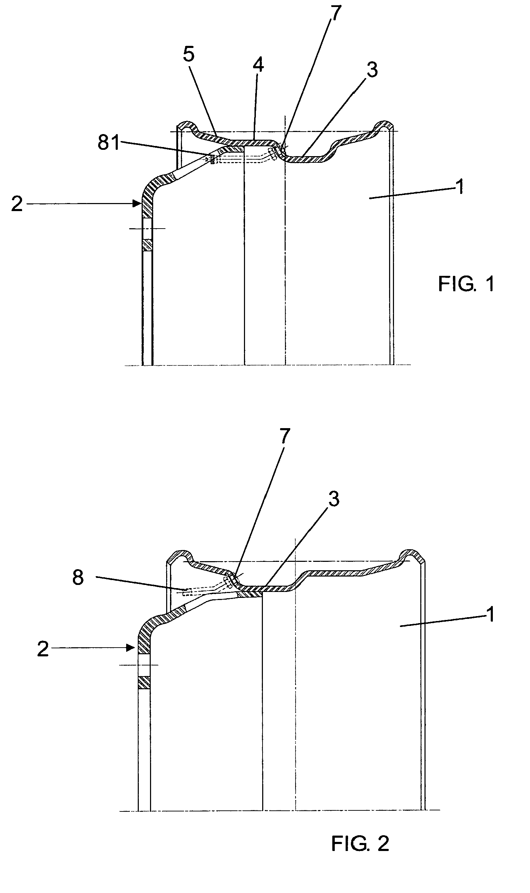

Figure 1 shows a partial cross section of a tubeless wheel with the current technology. This wheel is made up of a disk 2 and a rim 1, which comprises an internal valve 81 that is located in the valve hole 7 present on the external wall of the drop center 3. This type of construction is used for all tubeless wheel dimensions on trucks and busses, preferably used on vehicles fitted with drum brakes.

Figure 2 shows a partial cross section of a tubeless wheel with the current technology. This wheel is made up of a rim 1 and a disk 2 shows the external valve 8 located in the valve hole 7 present on the external wall of the drop center 3. The disk 2 in its turn is mounted on the drop center 3, with it being possible to see a reduction in the available diameter for the braking unit. This type of construction is used for small and medium sized tubeless wheel dimensions, able to support small and medium loads on trucks and busses and preferably applied to vehicles with disk brakes.

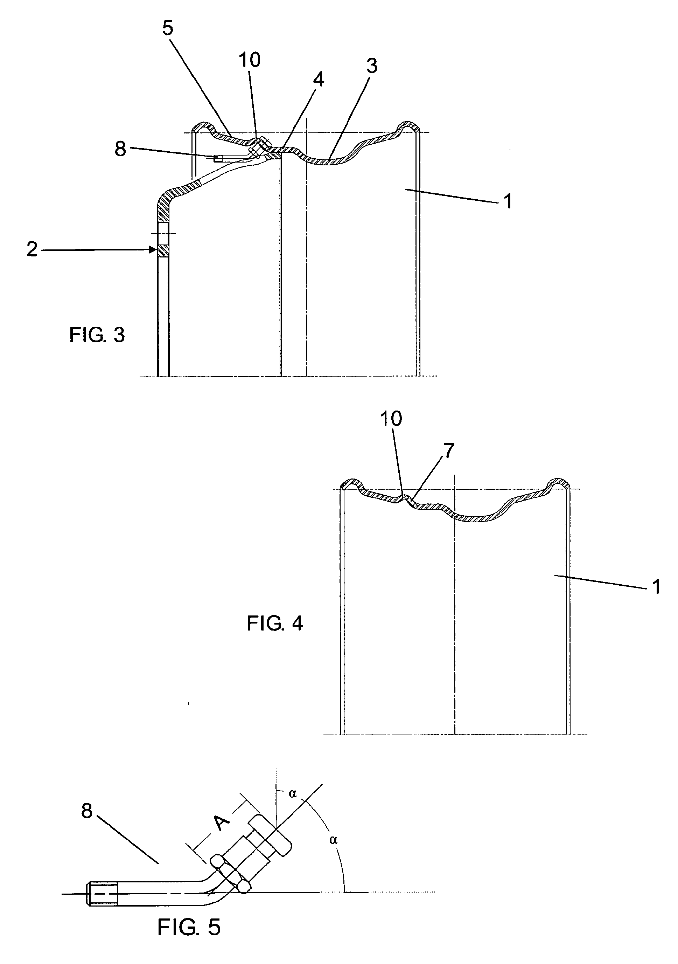

Figure 3 shows a partial cross section of a tubeless wheel with the current technology where the disk 2 is mounted on the rim's 4 ledge. The necessary space for placing the valve 8 on the external side of the disk 2 is afforded by the hump 10 existing on rim 1 with the valve 8 located on the wall of the hump 10 of the rim 1. In the construction of the wheel the join between the rim 1 and the disk 2 is carried out with the disk 2 mounted on the rim's 4 ledge.

This type of construction has a preferential application on vehicles fitted with disk brakes and was initially used on wheel dimensions with widths of equal to or less than nine inches due to the reduced ledge of rim 4 of rim 1 and consequently, of the difficulty in placing the valve 8. The encountered solution was the installation of the valve 8 on the vertical space created by the hump 10.

It is important to note that the external diameter of the hump 10 exceeds the start of the bead-seat 5. This characteristic, existence of a ridge created by the hump 10, is present along the entire rim 1 and presents various inconveniences.

It is possible for the occurrence of damage on mounting the tire in case the specific tools are not used for this operation once the tire will have to overcome the barrier created by the hump 10 around the entire perimeter of the rim 1. Besides this it is also possible to see a greater distance between the mid region on the bead-seat 5 and the supporting point of the disk 2 on the rim 1. This type of configuration results in an increased momentum applied to the rim 1, especially in the welded joint region between the disk 2 and the rim 1.

Figure 4 shows a typical profile of a tubeless wheel rim 1 with a hump 10. It must be reiterated that this hump 10 is nothing more than a ridge formed during the lamination process which allows for the creation of a vertical space where it is possible to place the valve 8 on this wall. This figure shows once again that the external diameter of the hump 10 exceeds the start of the bead-seat 5, a configuration that results in a series of potential damages to the tire when mounting it.

Figure 5 shows a profile view of the valve used on the mounted wheel with rim that has a hump 10. Its profile is normalized and the final positioning angle of the nipple is that of 0°. The body of the valve has an output angle of α 45°, complementary to the seating angle. The figure also illustrates the height "A" of the valve 8, which is that of 14 mm.

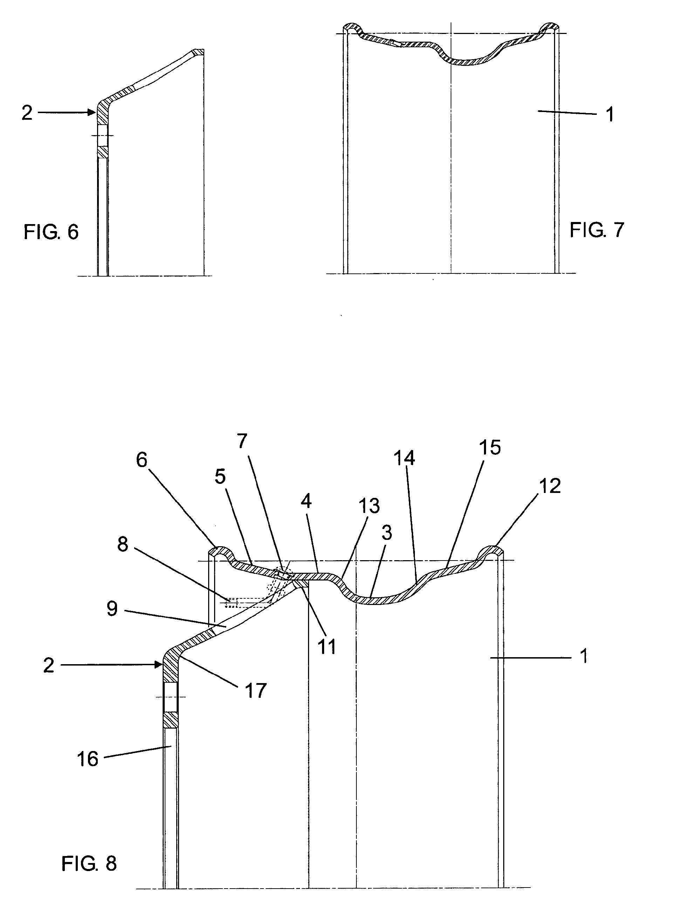

Figure 6 shows a profile of the new disk 2 for a tubeless wheel with an external valve 8, object of the current invention. Once the rim 1 and valve 2 are developed there will be free space on the outside for the disk 2 to pass. Taking into consideration the said circumstances the development of the disk 2 profile foresees the following characteristics:
✔ On the inside the space is limited by the contour of the braking system and through the respective distance that must be maintained from it.
✔ The profile of disk 2 must go through these limiting contours and be perfectly seated on the rim's 4 ledge.
✔ The disk's profile must have sufficient height so that it is possible for the welding nozzle flame to have access, by the inner portion, without the flame touching the drop center 3. Welding too close to the start of the radius on the drop center 3 must be avoided in seeing that the zone, if thermally affected, due to the elevated welding temperature, may affect the life of the wheel due to fatigue.
✔ The profile of disk 2 must overcome all of these limitations and still present sufficient rigidity to support the specified load and assure the necessary fatigue life.

This profile was defined through state-of-the-art technology which makes use of mathematical processes before validation of finite elements. In this manner it was possible to make viable the increase in available space to place the valve 8 on the outside of the wheel. It is worth noting that the document most representing the current technology (EP0701911) is dated September 1995, a fact which shows the difficulty in finding solutions that are effectively more advantageous.

Figure 7 shows a partial cross section of the new wheel rim 1 for the placing of valve 8 on the outside of the wheel. Rim 1 will be described further in detail in this descriptive report, highlighting that the profile of this new rim 1 is to be found rigorously within international specifications, among them, ETRTO (European Tire and RIM Technical Organization), the TRA (Tire and Rim Association - USA) and ALAPA (Latin American Tire and Rim Association - *Associação Latino Americana de Pneus e Aros*).

In Figure 8 it is possible to see a partial cross section of a tubeless wheel, object of this current invention, with an external valve 8 and made up of a rim 1 and disk 2.

As will be described the necessary space for placing the valve (8) on the outside of the disk 2 is afforded through a combination of factors distributed between the rim 1, disk 2 and valve 8.

The rim 1 shown in Figure 8 comprises a rim 6 flange on the disk side and an opposite flange 12, the rim's flange 6 being adjacent to a bead-seat 5 and the opposite flange 12 being adjacent to an opposite bead-seat 15, with both bead-seats 5,15 being inclined, the bead-seat 5 is adjacent to the rim's ledge 4, which is joined to the opposite bead-seat 15 by means of the drop center 3 through its side wall 13, on the side of disk 2, and the internal wall 14 on the opposite side of disk 2. The rim 1 also comprises a valve 8 seating region defined by two rival planes and free from ridges that are between the bead-seat 5 mid point and the start of the drop center 3 of the rim.

The new rim 1 design allows for the placing of the valve 8 in the valve hole 7 on the rim's ledge 4 due to a new seating angle of 25° as opposed to an angle of 45° in the case of the previous technology in which the valve is seated on the wall of the hump 10. At the same time the stamping of this new seat considers the least movement of material as possible, attributing to rim 1 a homogenous structure which guarantees an increased wheel fatigue life. Besides this, with the elimination of the hump 10, the mounting diameter for the tire has again become the rim ledge 4 itself and the start of the bead-seat 5, thus avoiding probable damage during the mounting of the tire, as well as the elimination for the need of special tools for this operation.

The new seating angle of the valve 8 on the rim 1 was taken to the maximum possible so that there would not be a breakage of the material during the lowering operation and the valve hole 7 also that no material would project internally into the rim 1, which would impede that the disk 2 would pass through it when the wheel is mounted.

The elimination of the hump 10, used by the current technology as shown by document EP0701911, directly causes a series of benefits, in seeing that this ridge has a number of implications such as:
✔ works as a structural reinforcement in a region where the rim 1 is free. With the mounting of disk 2 on the rim's ledge 4 of rim 1 immediately after the hump 10, the concentrated stresses on the rim 1, more specifically in the region between the end of the hump 10 and the supporting region of the disk 2, is very much elevated. This condition is also aggravated by the fact that there is a thermally affected zone in the associated region between the rim 1 and the disk 2, a fact that contributes to a shorter wheel fatigue life.
✔ due to the fact that the hump 10 is formed during the lamination process of the rim 1, it is subject to thickness variations over the profile that result from the wear process on the tools, this fact is also responsible for other discontinuities on the rim's 1 profile. Such inconveniences strongly demand a strong quality control during the manufacturing process, which contributes to the increased cost of manufacture of this type of rim 1.
✔ due to the absence of the hump 10, the blank that forms the profile of the new rim 1 is on average 5% less than when compared to a rim 1 of the same dimensions with the current technology. Consequently the final weight of the wheel as well as the final suspended mass of the vehicle, are lower. These characteristics result in various advantages, among them, the increased life span of the wheel, a savings in materials, besides enabling an increase in the vehicle's payload capacity.
✔ on rim 1 with the hump 10, the ledge diameter of rim 4 is lowered by creating a space to form the "vertical" wall. With the absence of this ridge, the rim's ledge 4 diameter of the new rim 1 is greater, resulting in a more perfect seal as soon as it is being filled with air, thus avoiding the need for special tools or extra rubber to comply with this step of filling the tire. Tests that have been carried out show that the new ledge of rim 4 with a larger diameter, the holding of the tire in case it leaks during use is totally efficient.

Still with reference to Figure 8 disk 2 comprises an extreme section 11 associated to the rim's ledge 4 of rim 1, being that its fastening is done in a preferential configuration, but is not mandatory, through welding. Disk 2 also presents a rectilinear transition section 17 between the extreme portion 11 and the central section of disk 16 of the wheel. Additionally the disk comprises a number of ventilation holes 9 of the disk brake.

It must be reiterated once again that the final height of disk 2 is show reduced when compared to disk 2 of the current technology with the hump 10 used on wheels of the same dimension. This fact results in an applied load momentum to the rim 1 object of this current invention more reduced, which will extend the wheel's fatigue life.

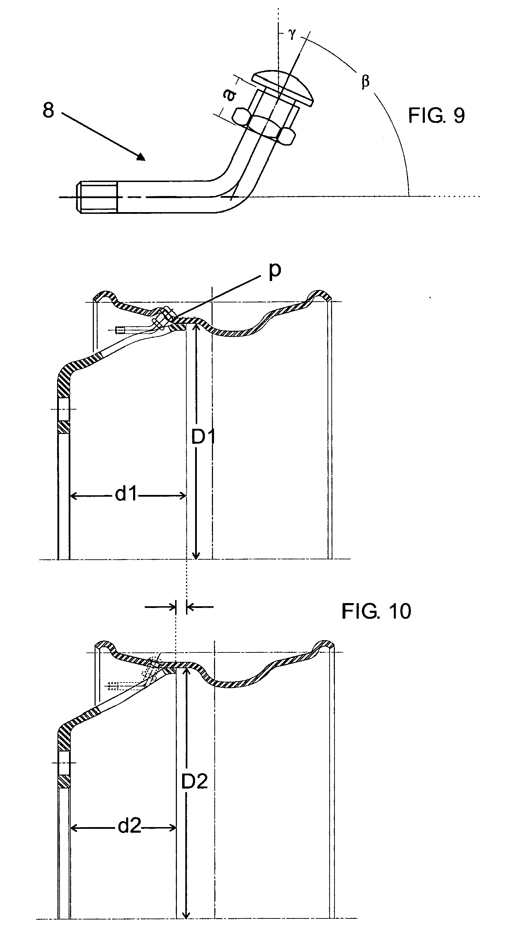

Valve 8 shown in Figure 8 and Figure 9 completes the unit for this invention on presenting a new output angle β of 65° as opposed to the usual angle α of 45° used by the current technology.

This new output angle β of 65° of the new valve 8 is complementary to the new seating angle γ of 25° on the rim in such a manner that it forms a final positioning angle of 0° in relation to the wheel's axle. This characteristic is of particular interest to guarantee the positioning of the valve 8 nipple that facilitates the access in the case of a "simple" assembly of the wheel on the front axle of the vehicle. This positioning angle also facilitates the "double" mounting of the wheel used on the rear axle of the vehicle when the complement of the filling nipple is mounted.

Additionally the nut that fastens the valve 8 on the outside of rim 1, has had its height "a" reduced with the purpose of facilitating the passage through the curve of the valve's body under this new angle, without prejudicing its tightening or fastening capacity. The height "a" of the nut that fastens valve 8 was reduced to 10 mm as opposed to the 14 mm present in the "A" height of this element with the current technology.

To better see the characteristics of valve 8 mentioned above Figure 9 shows a view in profile of the new valve 8 used in mounting the new wheel. Valve 8 was designed to have a seating angle on rim 1, which allows for the positioning of the nozzle aligned to 0°. Its lengths and bending radius as well as the height of the fastening nut had to be compensated to allow for the passage of the nut on the bend of the body when fastening valve 8. A reduction in the height of the fastening nut was carried out but without loosing the "threads" and consequently, without any prejudice to its fastening or holding capacity.

Figure 10 has as its objective to show the notorious differences between one wheel with the current technology with a hump 10 and the wheel that is the object of the current invention. This image compares the profile of both wheels making what was shown previously explicit. In the upper section of the Figure a wheel is shown with the current technology and with a hump 10 compared to a wheel, which is the object of the current invention shown in the lower section of the figure.

Point "p" shows the rim region that suffers a concentration of stresses due to the hump 10 and also the fact that disk 2 is mounted immediately after this ridge.

Through a comparison between the distances "d1" (wheel with the current technology with a hump) and "d2" (wheel, object of the current invention) it is easy to see the greater height of disk 2 "d1" in relation to the height of disk 2 "d2", with it being clearly visible the presence of greater load momentum on the wheel with the current technology with a hump 10.

It is also evident that the necessary stresses to mount the tire is greater on rim 1 of the current technology due to the presence of the hump 10 than on the rim 1 object of this current invention.

Dimensions "D1" and "D2" respectively show the ledge rim 4 diameters of the new rim 1 and on rim 1 with a hump 10. Once "D1" presents a final diameter available for a brake unit smaller than "D2", all of the observations with reference to the mounting, sealing and holding of the tire described previously are easily seen.

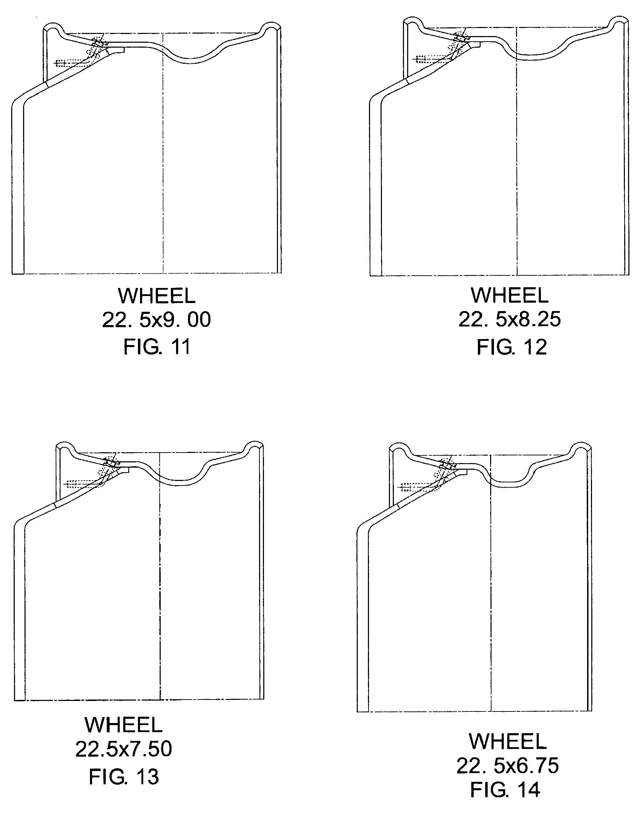

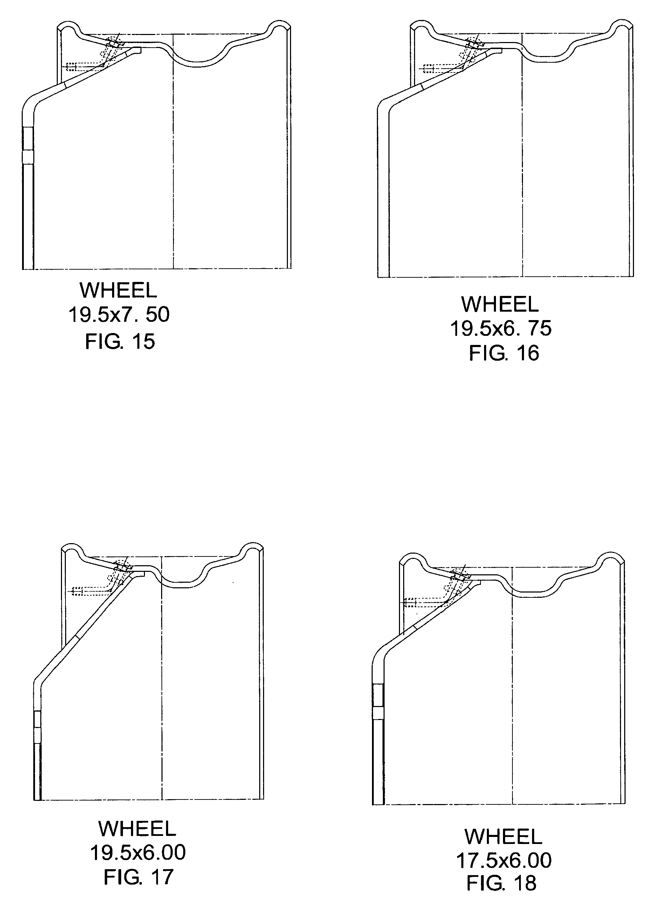

Figures 11 to 18 show various wheel sizes that necessarily force the calculation of new geometries.

Having described examples of the invention with reference to its preferred embodiments, it is to be understood that the scope of the current invention embraces other possible variations, being limited solely by the appended claims, including the possible equivalents therein.

## Claims

1. A tubeless steel wheel for vehicles transporting loads or large numbers of passengers, such as trucks or busses, comprised by a rim (1), a disk (2) and a valve (8) with the rim's (1) dimensions being equal to or less than nine inches in width,
the rim (1) comprises, starting from the side on which the disk (2) is mounted, a flange of the rim (6) adjacent to a bead-seat (5), the bead-seat (5) adjacent to a ledge of the rim (4) which is joined to the drop center (3) by means of a side wall (13),
the rim (1) also comprises a valve (8) seating region which is located between the bead-seat (5) midpoint and the start of the drop center (3),
the disk (2) containing an extreme section (11) associated to the rim's ledge (4),
**characterized by** the fact that:
the seating region of the valve (8) is defined by two competing planes free from ridges,
the valve (8), after it has been seated is positioned to the outside of the wheel in such a manner that it does not touch the external face of the disk or invades the internal part of the wheel through the ventilation hole (9).

2. A wheel, accordance with claim 1, **characterized by** the fact that the seating angle of the valve (8) is that of 25° in relation to the axles of the abscissa.

3. A wheel, according with claim 1, **characterized by** the fact that the valve (8) has an output angle (α) of 65° and a height of 10 mm, the valve (8) forming a final positioning angle of 0° in relation to the wheel's axis.
